Europäisches Patentamt

European Patent Office

Office européen des brevets

(19)

(11) Numéro de publication: **0 007 871**

**B1**

(12) **FASCICULE DE BREVET EUROPEEN**

(45) Date de publication du fascicule du brevet: **23.06.82**

(51) Int. Cl.³: **B 23 K 7/04**

(21) Numéro de dépôt: **79400526.4**

(22) Date de dépôt: **23.07.79**

(54) **Machine pour exécution à chaud de collets dans les fonds bombés.**

(30) Priorité: **28.07.78 FR 7823419**

(43) Date de publication de la demande:
**06.02.80 Bulletin 80/3**

(45) Mention de la délivrance du brevet:
**23.06.82 Bulletin 82/25**

(84) Etats contractants désignés:
**AT DE GB IT SE**

(56) Documents cités:
**FR - A - 1 202 461**
**US - A - 3 088 613**
**US - A - 3 799 007**

(73) Titulaire: **ATELIERS ET CHANTIERS DE BRETAGNE ACB Société anonyme dite:**
**Prairie-au-Duc**
**F-44200 Nantes (FR)**

(72) Inventeur: **Prevost, Jacques**
**11 rue du 4 Septembre**
**F-44100 Nantes (FR)**

(74) Mandataire: **Weinmiller, Jürgen et al,**
**Zeppelinstrasse 63**
**D-8000 München 80 (DE)**

Courier Press, Leamington Spa, England.

# Machine pour exécution à chaud de collets dans les fonds bombés

La présente invention concerne les machines permettant de réaliser, dans des fonds bombés hémisphériques, elliptiques ou des pièces similaires, des collets sur lesquels viennent se raccorder par soudage des tuyauteries, brides ou tubulures.

L'utilisation des fonds bombés dans l'industrie dite de grosse chaudronnerie est de plus en plus fréquente, notamment pour la construction d'éléments de centrales génératrices de courant électrique. Les caractéristiques mécaniques exigées et l'importance de ces fonds sur le plan dimensionnel incitent à concevoir des méthodes de fabrication tendant à réduire le prix de revient tout en visant à l'obtention de la qualité optimum du produit. Jusqu'ici les fonds bombés entrant dans la construction de générateurs de vapeur étaient réalisés an acier par moulage dans le but but d'obtenir directement au démoulage les formes et le positionnement des collets sur lesquels sont soudés les départs ou aboutissement de tuyauterie ou les tubulures ou robinetterie d'arrivée ou de sortie de vapeur. Les pressions et températures de régime élevé conditionnent des épaisseurs de paroi très importantes pour lesquelles tout défaut de coulée entraîne la mise au rebut des pièces. A ce mode d'obtention par moulage il est de plus en plus envisagé de substituer la fabrication par emboutissage à chaud garantissant une bonne homogénéité de toute la pièce.

Dans ce cas, il est nécessaire de disposer de machines permettant d'effectuer successivement les différentes phases nécessaires à l'obtention et à la finition complète d'un fond bombé comportant un ou plusieurs collets, les différentes phases étant dans l'ordre, l'oxycoupage du bord du fond bombé avec possibilité d'obtention du chanfrein nécessaire à son assemblage par soudure avec la virole cylindrique du corps de l'appareil dans lequel il s'intègre, l'oxycoupage des trous nécessaires au formage des collets selon des diamètres à définir, chauffage local à haute température de la zone à former, introduction du dispositif de formage à travers le trou, exécution du formage du collet et oxycoupage du bord du collet avec possibilité d'obtention du chanfrein nécessaire pour effectuer la liaison par soudure avec le tube de raccordement sur ledit collet.

On a jéjà proposé des machines permettant d'exécuter certaines de ces opérations. Par exemple, le brevet FR 1.202.461 décrit une machine dans laquelle un équipage mobile portant un chalumeau et un galet de formage tourne autour de l'axe du fond posé sur un chariot, de façon à en découper et former le bord.

Le brevet US 3.088.613 décrit un dispositif qui permet de faire varier l'orientation d'une pièce sphérique portée par des galets, et par conséquent de l'amener dans une orientation favorable pour certaines opérations d'usinage. Un tel système aboutit à des installations compliquées, car les appareillages correspondant aux diverses opérations doivent être écartés lorsque'on procède à la mise en place de la pièce sur ses galets.

On peut encore mentionner, dans un autre domaine, le brevet US 3.799.007, qui décrit un appareillage destiné au formage de petites pièces bombées, et qui comprend un carrousel portant des supports capables de tourner sur eux-mêmes devant chaque poste de travail. Une telle solution n'est pas adaptée au traitement de pièces aussi importantes que des fonds bombés auxquels se rapporte la présente invention.

La machine, objet de l'invention, se compose d'un bâti en mécano-soudure sur lequel se déplace en translation un chariot porte-pièce de façon à placer le fond à usiner sur un poste de chargement et à l'aplomb de postes d'usinage successifs répartis sur la longueur du bâti. Le chariot porte-pièce comporte un plateau tournant permettant de positionner radialement la pièce et de lui faire exécuter une rotation complète pour l'exécution de la rive et du chanfrein nécessaire à l'opération de soudage avec la virole cylindrique de l'appareil, au moyen d'une installation d'oxycoupage équipant le chariot. Cette première opération peut s'effectuer à l'aplomb du poste de chargement et de déchargement, lequel consiste en un vérin de soulèvement dont le but est de faciliter le montage et l'évacuation de la pièce. Le chariot porte-pièce achemine par translation le fond bombé dans l'axe d'un premier poste d'élaboration du collet, que l'on désignera dans la présente description sous le nom d'arcade principale, laquelle consiste en un double portique basculant autour d'un axe principal disposé orthogonalement à l'axe de translation du chariot porte-pièce de façon à obtenir une inclinaison commandée par vérin hydraulique. Dans l'axe de la partie inférieure de cette arcade est monté un vérin assurant les fonctions nécessaires à la réalisation des collets. Dans l'axe de la partie supérieure est installé un dispositif de recyclage d'un des éléments composant l'outillage utilisé à la confection des collets. A titre complémentaire, la machine de base peut être équipée d'une installation d'oxycoupage disposée sur le chariot porte-pièce, d'une arcade pivotante et d'un ensemble de chauffage local annexé à ladite arcade annexe.

Les dessins annexés illustrent un mode de réalisation possible d'une machine conforme à la présente invention. Ceux-ci représentent:

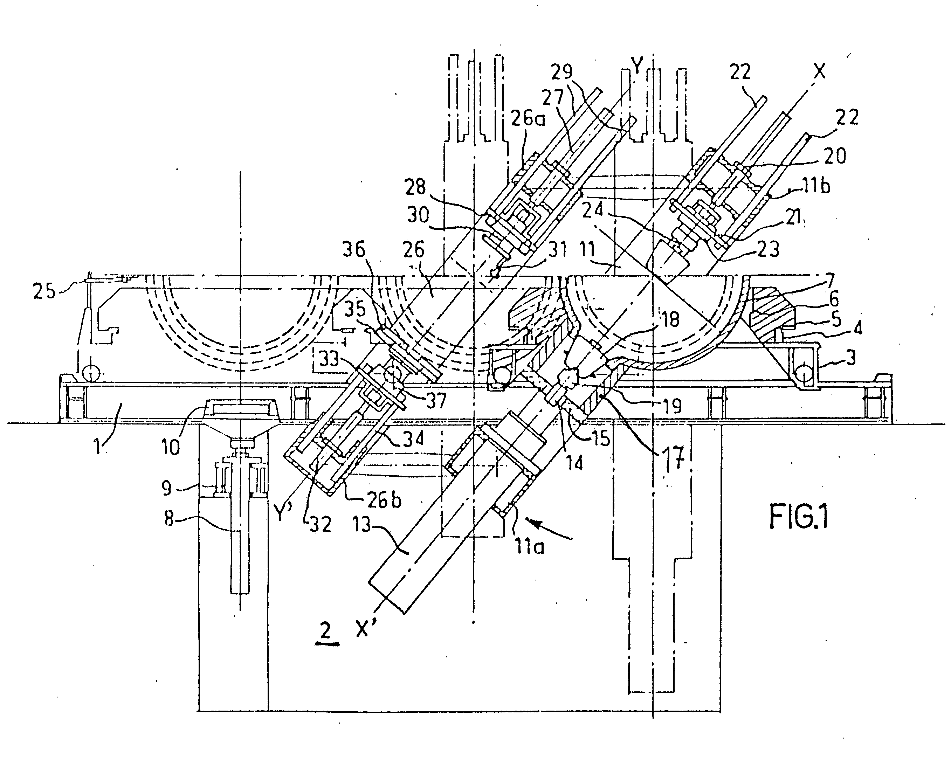

Fig. 1 une vue en élévation coupe de la machine équipée d'une arcade annexe.

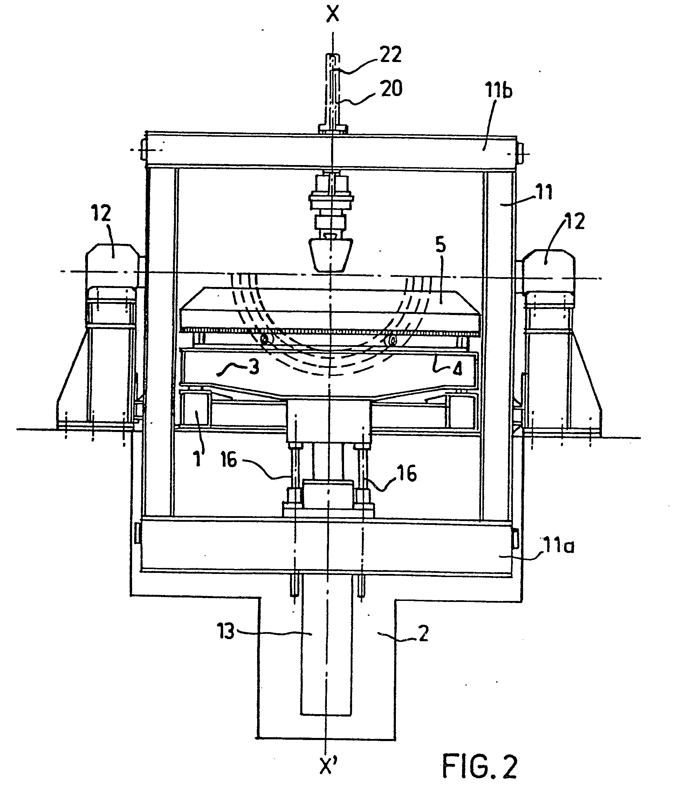

Fig. 2 une vue transversale de la machine montrant l'arcade pivotante principale.

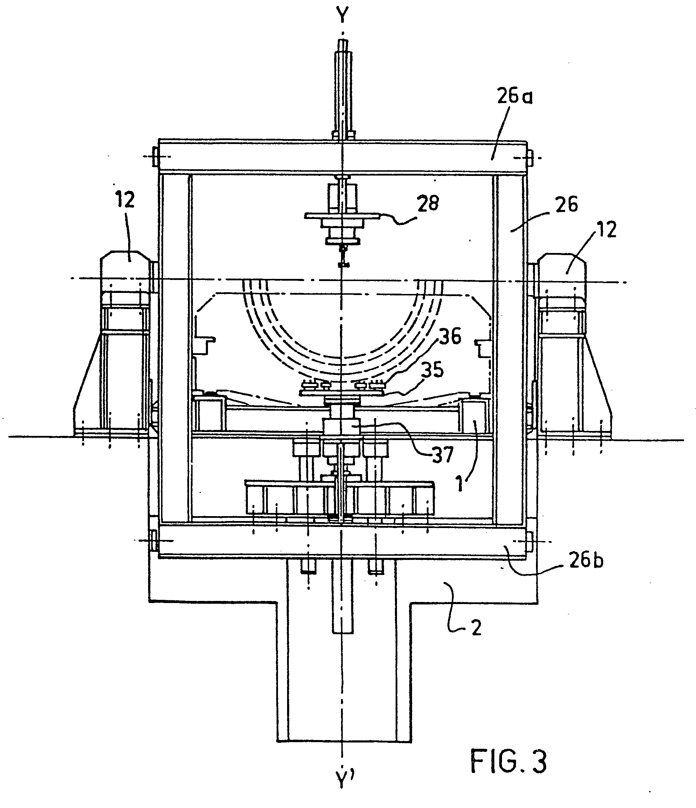

Fig. 3 une vue transversale de la machine montrant l'arcade pivotante annexe.

Telle que représentée, la machine se compose d'un bâti métallique 1 réalisé en mécanosoudure fixé rigidement au sol et usiné de façon à réaliser un double chemin de roulement au-dessus d'une fosse 2 exécutée dans le sol du local où s'implante la machine. Sur ce bâti, se déplace en translation un chariot porte-pièce 3, muni à cet effet de galets en acier traité, il est propulsé par un moto-réducteur frein à deux vitesses. La partie supérieure de ce chariot est équipée d'un rail circulaire 4 afin de permettre la rotation d'un plateau tournant 5, entraîné au moyen d'un dispositif pignon et chaîne par un moto-réducteur à vitesse variable. Ce plateau tournant comporte un alésage circulaire 6 dans lequel a'ajustent des cales 7 destinées à réaliser un positionnement et un centrage rapides et précis du fond bombé à usiner: ces cales, facilement amovibles, permettent de traiter sur un même plateau une gamme étendue de diamètres de fonds bombés.

Répartis sur la longueur du bâti 1 la machine comprend:

— un poste de chargement et de déchargement,

— une arcade pricipale,

— une arcade annexe située entre le poste de chargement et l'arcade principale.

Le poste de chargement et de déchargement est constitué d'un vérin 8 à double effet supporté par un bâti mécano-soudé 9 fixé dans la fosse 2, lequel vérin d'action verticale porte à l'extrémité de sa tige un plateau 10 destiné à supporter le fond bombé soit au moment de sa mise en place sur le chariot porte-pièce 3, soi au moment de l'éjection dudit fond pour son évacuation après usinage.

L'arcade principale est composée d'un double portique ou cadre 11 réalisé selon des poutres mécano-soudées basculant autour d'un axe horizontal disposé perpendiculairement à l'axe de translation du chariot porte-pièce 3. A cet effet, l'arcade est supportée par deux paliers 12 équipés de roulements à rotuie sur rouleaux: la commande d'inclinaison de l'arcade s'effectue au moyen d'un vérin hydraulique. La traverse inférieure 11a de l'arcade porte en son milieu, et selon un axe xx' contenu dans le plan médian transversal de l'arcade, un dispositif spécial faisant l'objet d'un brevet déposé par la demanderesse sous le N° 73.02.187, lequel dispositif consiste en un vérin spécial 13, dit vérin de travail, assurant simultanément le deux fonctions nécessaires pour la réalisation d'un collet. Ce vérin est composé d'un cylindre à l'intérieur duquel coulissent deux pistons indépendants, l'un assurant la fonction serre-flan, l'autre la fonction traction, la tige 14 du piston portant l'outil de formage traversant la tige 15 du piston solidaire du serre-flan. L'huile à haute pression introduite entre les deux pistons fournit un effort identique au serre-flan et au piston de traction selon le principe action = réaction, ce montage ayant pour avantage de n'entraîner aucune sollicitation sur l'arcade. Deux vérins annexes 16 permettant d'effectuer les manoeuvres d'approche et de rappel rapide du serre-flan. L'outillage nécessaire à l'exécution d'un collet et adaptable au dispositif ci-dessus décrit se compose d'une matrice serre-flan 17 en acier traité centrée et fixée par vis sur la tige 14 du piston et d'une olive 18 en fonte spéciale immobilisée à l'extrémité de la tige 14 du piston de traction au moyen d'un dispositif de montage et démontage rapides 19. La traverse supérieure 11b de l'arcade principale comporte, disposé selon l'axe xx', un dispositif dit de recyclage automatique de l'olive 18 composé d'un vérin linéaire 20 actionnant un plateau 21 guidé par deux colonnes 22. Sur ce plateau est monté un vérin rotatif 23 entraînant un mandrin de serrage 24 assurant par rotation d'un quart de tour le verrouillage rapide de l'olive 18 dans le dispositif 19 placé à l'extrémité de la tige 14 du piston de traction.

La description qui précède est celle d'une machine dite de base, laquelle ne comporte pas de dispositif d'oxycoupage et de chauffage, ces opérations pouvant être effectuées préalablement avec les moyens existant dans l'usine.

Complémentairement à l'équipement de la machine de base et dans le but d'obtenir une grande souplesse d'utilisation, ainsi qu'un gain de temps appréciable par réduction des manutentions et une économie d'énergie par un chauffage localisé de la zone de formage du collet, il peut être adjoint:

— une installation d'oxycoupage sur le chariot porte-pièce.

— une arcade annexe pivotante comportant un ensemble d'oxycoupage et de chauffage local.

C'est ainsi que le chariot porte-pièce 3 peut être équipé d'une tête d'oxycoupage 25 réglable en hauteur et selon le diamètre extérieur du fond bombé à traiter, une commande à distance permettant à partir d'un poste central de modifier éventuellement les réglages en cours d'opération sans arrêt de la rotation du plateau. Cette tête est équipée de deux chalumeaux permettant de réaliser simultanément le dressage de la river et le chanfreinage de celle-ci en vue de son soudage.

De conception identique à l'arcade principale, l'arcade annexe 26 s'incline parallèlement à celle-ci et d'une façon simultanée grâce à des biellettes reliant en partie haute et basse les deux arcades principale et annexe, son inclinaison étant donnée par un vérin hydraulique dont la course est pré-réglée. Sur la traverse supérieure 26a de l'arcade est placé un dispositif d'oxycoupage constitué d'un vérin linéaire 27 actionnant en translation selon un axe yy' un plateau 28 guidé par deux colonnes 29. Sur ce dernier est monté et entraîne en rotation un autre plateau 30 au moyen d'un moto-réducteur à vitesse variable, lequel plateau est muni d'une tête d'oxycoupage 31 de rayon de giration réglable de façon à pouvoir réaliser des trous de différents diamètres dans le fond bombé préalablement à l'opération de formage. Une commande à distance permet de régler la torche en cours d'opération sans interrompre la rotation du plateau. La traverse inférieure 26*b* de l'arcade annexe porte un dispositif de chauffage composé d'un vérin linéaire 32 actionnant un plateau 33 guidé en translation selon l'axe yy' par deux colonnes 34. Sur ce plateau est monté un autre plateau 35 équipé de brûleurs 36 entraîne en rotation alternée par un vérin rotatif 37. Ce dispositif permet de limiter l'opération de chauffage à la zone d'intervention du vérin de travail de l'arcade principale.

La machine ainsi constituée comporte les équipements hydrauliques et électriques nécessaires à son fonctionnement. L'équipement hydraulique comporte, entre autres, des groupes moto-pompes du type à débit variable permettant d'obtenir des vitesses réglables en continu ainsi que des groupes moto-pompes annexes de pilotage et des dispositifs de sécurité hydrauliques. Les courses des différents mouvements sont réglables par déplacement de cames agissant sur des contacts de fin de course.

Le déroulement du cycle des opérations nécessaires à l'exécution d'un collet suivant un angle donné par rapport à la verticale dans un fond hémisphérique en acier est le suivant:

— mise en place de la pièce sur le plateau 10 du vérin 8 du poste de chargement placé en position haute;

— descente du vérin 8 pour mise en appui de la pièce sur le plateau tournant 5 du chariot porte-pièce 3; amorçage du chalumeau;

— oxycoupage de la rive du fond par rotation complète du plateau et exécution du chanfrein de soudage; arrêt du chalumeau et de la rotation du plateau;

— déplacement du chariot porte-pièce 3 jusqu'à l'axe de l'arcade annexe 26 en position verticale et inclinaison de celle-ce selon l'angle choisi;

— descente de la tête d'oxycoupade 31, amorçage du chalumeau et oxycoupage du trou;

— remontée de la tête d'oxycoupage et évacuation de la chute au moyen du vérin inférieur 32;

— montée de la tête de chauffage 35 et amorçage des brûleurs 36, chauffage de la zone du trou par rotation alternée des brûleurs, descente de la tête;

— retour à la verticale de l'arcade annexe;

— déplacement du chariot porte-pièce 3 jusqu'à l'axe de l'arcade principale 11 en position verticale, l'olive 18 étant accrochée au système de recyclage 24, suivi d'une inclinaison de l'arcade selon l'angle choisi;

—montée de la tige du vérin de traction 13 au travers du trou oxycoupé et montée simultanée de serre-flan 17 jusqu'au contact de la pièce;

— descente du vérin de recyclage 20 et verrouillage de l'olive sur le dispositif 19 équipant la tige du vérin de traction par rotation d'un quart de tour;

— après remontée du vérin de recyclage, mise en pression du vérin spécial 13 et exécution du collet;

— descente du serre-flan et retour à la position verticale de l'arcade principale;

— déplacement du chariot porte-pièce jusque dans l'axe de l'arcade annexe 26; inclinaison de l'arcade, mise en route de la tête d'oxycoupage 31 et dressage du collet;

— après remontée de la tête d'oxycoupage, déplacement du chariot vers le poste de déchargement, éjection de la pièce par montée du vérin 8.

L'invention ne se limite aucunement au mode de réalisation spécialement décrit, mais elle embrasse toutes les variantes possibles à condition que celles-ci ne soient pas en contradiction avec l'objet de chacune des revendications annexées à la présente description.

La machine, objet de l'invention, peut être utilisée pour a réalisation de tous collets sur des fonds bombés hémisphériques, elliptiques, ou autres, de grandes dimensions.

**Revendications**

1. Machine permettant d'exécuter à chaud les différentes phases successives, comprenant le découpage du trou et la formation du collet, nécessaires à l'obtention, dans des fonds bombés hémisphériques, elliptiques, ou autres pièces similaires, de collets sur lesquels se raccordent par soudage des tuyauteries, brides ou tubulures, ladite machine comportant un plateau tournant (5) sur lequel on immobilise la pièce sur laquelle on veut exécuter un collet, caractérisée en ce que ledit plateau tournant est supporté par un chariot porte-pièce (3), mobile en translation sur un bâti (1) pour déplacer ladite pièce entre un poste de chargement (8, 10) situé à l'extrémité du bâti et différents postes d'usinage consistant en une arcade pivotante annexe (26) qui porte les matériels (31, 36) nécessaires au découpage du trou préalable à la formation du collet et au chauffage local des bords dudit trou, ainsi qu'au dressage et au chanfreinage du collet une fois celui-ci formé, et en une arcade pivotante principale (11) portant les matériels (18) nécessaires au formage à chaud du collet.

2. Machine selon la revendication 1, caractérisée en ce que le bâti métallique la constituant (1) est un ensemble mécanosoudé fixé rigidement au sol et usiné de facon à réaliser un double chemin de roulement du chariot porte-pièce (3) au-dessus d'une fosse (2) exécutée dans le sol dans laquelle s'inscrit le poste de chargement et de déchargement (8, 10) et l'encombrement des arcades annexe (26) et principale (11) au cours de leur pivotement.

3. Machine selon l'une des revendications 1 et 2, caractérisée en ce que le poste de chargement et de déchargement est constitué d'un vérin (8) à double effet supporté par un bâti (9) ancré dans la fosse, lequel vérin d'action verticale porte à l'extrémité de sa tige un plateau (10) destiné à supporter la pièce à usiner soit au moment de sa mise en place sur le chariot porte-pièce (3), soit au moment de son éjection pour évacuation après usinage.

4. Machine selon l'une des revendications 1 à 3, caractérisée en ce que le chariot porte-pièce (3) porte également les matériels (25) nécessaires au dressage et au chanfreinage de la rive de la pièce sur laquelle on veut exécuter un collet.

5. Machine selon l'une des revendications 1 à 4, caractérisée en ce que la chariot porte-pièce est constitué d'un châssis (1) mécano-soudé équipé de galets de roulement et propulsé au moyen d'un moto-réducteur frein à deux vitesses, lequel châssis, évidé en son centre, porte en sa partie supérieure un rail circulaire (4) permettant la rotation d'un plateau (5) entraîné au moyen d'un dispositif pignon et chaîne par un moto-réducteur à vitesse variable lequel plateau tournant comporte un alésage circulaire (6) permettant le passage du plateau (10) du poste de chargement et dans lequel alésage s'ajustent des cales (7) constituant un berceau permettant d'obtenir un positionnement et un centrage rapides et précis de la pièce à usiner.

6. Machine selon l'une des revendications 1 à 5, caractérisée en ce que les postes d'usinage, dits arcade principale pivotante (11) et arcade annexe pivotante (26), sont constitués d'un double portique ou cadre mécano-soudé basculant autour d'un axe horizontal disposé perpendiculairement à l'axe de translation du chariot porte-pièce (3), la commande d'inclinaison des arcades s'effectuant au moyen d'un vérin hydraulique, lesdites arcades s'inclinant parallèlement et simultanément grâce à un jeu de biellettes les reliant en parties haute et basse.

7. Machine selon la revendication 6, caractérisée en ce que la traverse inférieure (11a) de l'arcade principale pivotante (11) porte en son milieu et selon un axe vertical contenu dans le plan médian transversal de l'arcade un vérin (13) assurant simultanément les deux fonctions nécessaires à l'obtention du collet, lequel vérin est composé d'un cylindre à l'intérieur duquel coulissent deux pistons (14, 15) indépendants, l'un solidaire du dispositif serre-flan, l'autre portant l'outil de formage (18) par traction, l'huile à haute pression introduite entre les deux pistons fournissant un effort identique au serre-flan et à l'outil de travail selon le principe action = réaction de façon à n'entraîner aucune sollicitation sur l'arcade.

8. Machine selon la revendication 7, caractérisée en ce que le dispositif serre-flan est soumis à l'action de deux vérins annexés permettant des manoeuvres d'approche et de rappel rapides.

9. Machine selon la revendication 7 ou 8, caractérisée en ce que l'outillage nécessaire au formage du collet se compose d'une matrice serre-flan (17) en acier traité, centrée et fixée sur l'un des pistons (15) du vérin, et d'une olive (18) en fonte spéciale se fixant à l'extrémité de la tige de l'autre piston (14) dudit vérin au moyen d'un dispositif de montage (19) et de démontage rapides au quart de tour.

10. Machine selon la revendication 9, caractérisée en ce que la traverse supérieure (11b) de l'arcade principale pivotante (11) porte en son milieu et selon l'axe vertical passant par la vérin de traction un dispositif de recyclage automatique de l'olive composé d'un vérin linéaire (20) actionnant un plateau (21) guidé en translation par deux colonnes latérales (22) et sur lequel plateau est monté un vérin rotatif (23) entraînant un mandrin de serrage (24) assurant par rotation d'un quart de tour le verrouillage rapide de l'olive (18) dans le dispositif placé à l'extrémité de la tige (14) du piston de traction.

11. Machine selon les revendications 1 à 10, caractérisée en ce que la traverse supérieure (26a) de l'arcade annexe pivotante (26) porte en son milieu et selon un axe vertical contenu dans le plan médian transversal de l'arcade un dispositif d'oxycoupage constitué d'un vérin linéaire (27) actionnant en translation un plateau (28) guidé par deux colonnes latérales (29) et sur lequel plateau est monté et entraîné en rotation un autre plateau (30) au moyen d'un moto-réducteur à vitesse variable, ledit plateau tournant comportant une tête d'oxycoupage (31) de rayon de fixation réglable afin de réaliser des trous de différents diamètres déterminés en fonction du collet à former.

12. Machine selon les revendications 1 à 11, caractérisée en ce que la traverse inférieure (26b) de l'arcade annexe pivotante (26) porte selon l'axe du dispositif d'oxycoupage de la traverse supérieure un dispositif de chauffage constitué d'un vérin linéaire (32) actionnant un plateau quidé (33) en translation au moyen de deux colonnes latérales (34) et sur lequel plateau est monté un autre plateau (35) équipé de brûleurs (36) entraîné en rotation alternée par un vérin rotatif (37), le chauffage ainsi obtenu se limitant à la zone bordant le trou.

13. Machine selon les revendications 1 à 12, caractérisée en ce que le chariot porte-pièce (3) est équipé d'une tête d'oxycoupage (25) réglable en hauteur et selon le diamètre extérieure de la pièce à traiter, laquelle tête est équipée de deux chalumeaux permettant de réaliser simultanément le dressage de la rive de la pièce ainsi que le chanfreinage de celle-ci pour sa liaison par soudure avec le corps de l'appareil dans lequel elle s'intègre.

## Patentansprüche

1. Maschine zum Heißausführen der verschiedenen aufeinanderfolgenden Arbeitsgänge des Ausschneidens des Lochs und des Formens des Kragens, die notwendig sind, um in halbkugelförmig oder elliptisch gewölbten Böden oder anderen ähnlichen Stücken Kragen zu erhalten, an die durch Schweißen Rohrleitungen, Flansche oder Rohre angeschlossen werden, wobei diese Maschine eine Drehplatte (5) aufweist, auf der man das Werkstück, auf dem man einen Kragen anbringen will, festlegt, dadurch gekennzeichnet, daß die Drehplatte von einem Werkstück-Trägerwagen (3) gehalten wird, der verschiebbar auf einem Gerüst (1) angeordnet ist, um das Werkstück zwischen einer Ladestation (8, 10) am Ende des Gerüsts und verschiedenen Bearbeitungsstationen zu verschieben, die aus einem schwenkbaren Nebenrahmen (26), der die für das Ausschneiden des Lochs vor dem Formen des Kragens und dem lokalen Erhitzen der Ränder des Lochs wie auch für das Richten und Abfasen des geformten Kragens nötigen Materialien (31, 36) trägt, und aus einem schwenkbaren Hauptrahmen (11) bestehen, der die für das Heißformen des Kragens notwendigen Werkzeuge trägt.

2. Maschine nach Anspruch 1 dadurch gekennzeichnet, daß das Metallgerüst (1), aus dem sie besteht, eine mechanisch geschweißte Einheit ist, die fest auf dem Boden befestigt und so bearbeitet ist, daß sie einen doppelten Rollweg des Werkstück-Trägerwagens (3) über einer im Boden angebrachten Grube (2) bildet, in der sich die Lade- und Entladestation (8, 10) und der Raumbedarf der Neben- (26) und Hauptrahmen (11) während ihres Schwenkens befinden.

3. Maschine nech einem der Ansprüche 1 und 2, dadurch gekennzeichnet, daß die Lade- und Entladestation aus einem Hubzylinder (8) mit Doppelwirkung besteht, der von einem in der Grube verankerten Gerüst (9) getragen wird, wobei der Hubzylinder mit senkrechter Wirkung am Ende seines Schafts eine Platte (10) trägt, die das zu bearbeitende Werkstück entweder während seiner Anbringung auf dem Werkstück-Trägerwagen (3) oder sines Auswurfs nach der Bearbeitung zur Weitergabe trägt.

4. Maschine nach einem der Ansprüche 1 bis 3, dadurch gekennzeichnet, daß der Werkstück-Trägerwagen (3) ebenfalls die Materialien (25) trägt, die zum Richten und Abfasen des Rands des Werkstücks benötigt, werden, auf dem man einen Kragen anbringen will.

5. Maschine nach einem der Ansprüche 1 bis 4, dadurch gekennzeichnet, daß der Werkstück-Trägerwagen aus einem mechanisch geschweißten Chassis (1) besteht, das mit Laufrollen ausgerüstet ist und mit Hilfe eines Bremsgetriebes mit zwei Gängen angetrieben wird, wobei das Chassis, das in seiner Mitte ausgehöhlt ist, an seinem oberen Teil eine Ringschiene (4) trägt, die die Drehung einer Platte (5) ermöglicht, die mit Hilfe einer Zahnrad- und Kettenvorrichtung von einem Bremsgetriebe mit variabler Geschwindigkeit angetrieben wird, wobei die Drehplatte eine kreisförmige Bohrung (6) aufweist, die die Durchführung der Platte (10) der Ladestation ermöglicht und in die Einlagen (7) eingepaßt sind, die ein Gewölbe bilden, das ein schnelles und genaues Positionieren und Zentrieren des zu bearbeitenden Werkstücks erlaubt.

6. Maschine nach einem der Ansprüche 1 bis 5, dadurch gekennzeichnet, daß die Bearbeitungsstationen, d.h. der schwenkbare Hauptrahmen (11) und der schwenkbare Nebenrahmen (26), aus einem doppelten mechanisch geschweißten Balkengerüst oder Rahmen bestehen, der um eine horizontale Achse schwenkt, die senkrecht zur Verschiebungsachse des Werkstück-Trägerwagens (3) liegt, wobei die Neigungssteuerung des Ragmens mithilfe eines Hydraulik-Zylinders erfolgt und die Rahmen sich parallel und gleichzeitig aufgrund von mehreren Hebeln neigen, die sie oben und unten verbinden.

7. Maschine nach Anspruch 6, dadurch gekennzeichnet, daß der untere Querbalken (11a) des schwenkbaren Hauptrahmens (11) in seiner Mitte und gemäß einer vertikalen Achse, die in der mittleren Querebene des Ragmens liegt, einen Hubzylinder (13) trägt, der gleichzeitig die beiden zum Erhalten des Kragens notwendigen Funktionen ausübt und der aus einem Zylinder besteht, in dessen Innerem zwei unabhängige Kolben (14, 15) gleiten, von denen der eine fest mit der Preßvorrichtung verbunden ist und der andere das Formwerkzeug (18) durch Zug trägt, wobei das Öl, das mit hohem Druck zwischen die beiden Kolben gebracht wird, die gleiche Kraft auf die Presse und das Arbeitswerkzeug gemäß dem Prinzip Aktion = Reaktion ausübt, so daß der Rahmen in keiner Weise belastet wird.

8. Maschine nach Anspruch 7, dadurch gekennzeichnet, daß die Preßvorrichtung der Wirkung zweier Nebenkolben ausgesetzt wird, die schnelle Annäherungs- und Rückholoperationen ermöglichen. 9. Maschine nach Antionen ermöglichen.

9. Maschine nach Anspruch 7 oder 8, dadurch gekennzeichnet, daß das zum Formen des Kragens notwendige Werkzeug aus einer Matrizenpresse (17) aus behandeltem Stahl, die auf einem der Kolben (15) des Hubzylinders zentriert und befestigt ist, und aus einem olivenförmigen Kopf (18) aus speziellem Guß besteht, der am Ende des Schaftes des anderen Kolbens (14) des Hubzylinders mithilfe einer Schnellspann-Vorrichtung aufgrund einer Vierteldrehung befestigt ist.

10. Maschine nach Anspruch 9, dadurch gekennzeichnet, daß der obere Querbalken des drehenden Hauptrahmens (11) in seiner Mitte und gemäß der durch den Zugkolben gehenden vertikalen Achse eine Vorrichtung zur automatischen Rückführung des olivenförmigen Kopfes aufweist, die aus einem linearen Zylinder (20) besteht, der eine Platte (21) steuert, die in ihrer Verschiebebewegung von zwei seitlichen Säulen (22) geführt wird und auf der eine drehbarer Zylinder (23) augebracht ist, der einen Spannkopf (24) antreibt, wobei durch eine Vierteldrehung das schnelle Aufspannen des Olivenförmigen Kopfes (18) in der Vorrichtung am Ende des Schaftes (14) des Zugkolbens gewährleistet wird.

11. Maschine nach einem der Ansprüche 1 bis 10, dadurch gekennzeichnet, daß der obere Querbalkan (26a) des schwenkbaren Nebenrahmens (26) in seiner Mitte und gemäß einer in der mittleren Querebene des Rahmens liegenden vertikalen Achse ine Schneidbrennervorrichtung aufweist, die aus einem linearen Zylinder (27) besteht, der die Verschiebung einer Platte (28) steuert, die von zwei seitlichen Säulen (29) geführt wird und auf der eine andere Platte (30) sitzt und mit Hilfe eines Getriebes mit variabler Geschwindigkeit in Drehung versetzt wird, wobei die Drehplatte einen Schneidbrennerkopf (31) mit regulierbarem Fixierradius aufweist, um so Löcher mit verschiedenen Durchmessern in Abhängigkeit vom zu formenden Kragen herzustellen.

12. Maschine nach den Ansprüchen 1 bis 11, dadurch gekennzeichnet, daß der untere Querbalken (26b) des schwenkbaren Nebenrahmens (26) gemäß der Achse der Schneidbrennervorrichtung des oberen Querbalkens eine Heizvorrichtung aufweist, die aus einem linearen Zylinder (32) besteht, der die Verschiebung einer von zwei seitlichen Säulen (34) geführten Platte (33) steuert, auf der eine andere Platte (35) montiert ist, die mit Brennern (36) ausgerüstet ist und von einem drehbaren Zylinder (37) in drehende Hin- und Herbewegung versetzt wird, wobei die so erhaltene Aufheizung auf den Randbereich des Lochs begrenzt ist.

13. Maschine nach den Ansprüchen 1 bis 12, dadurch gekennzeichnet, daß der Werkstück-Trägerwagen (3) mit einem Schneidbrennerkopf (25) ausgerüstet ist, der in der Höhe und entsprechend dem äußeren Umfang des zu bearbeitenden Werkstücks regulierbar und mit zwei Flammköpfen ausgerüstet ist, die gleichzeitig das Richten des Werkstückrands und das Abfasen des Werkstücks für seine Schweißverbindung mit dem Gehäuses des Apparats ermöglichen, in den es eingebaut wird.

**Claims**

1. Machine for the hot forming of the different successive working stages, comprising the cutting of the hole and the forming of the collar necessary for the obtention of collars in convex hemispherical, elliptical bottoms or other similar pieces, to which collars, tubings, flanges or tubes are connected by welding, said machine comprising a rotating plate (5) on which the working piece to be furnished with a collar is immobilized, characterized in that said rotating plate is supported by a working piece support carriage (3) which is mobile in translation on a platform (1) in order to move said piece between a charging station (8, 10) situated at the end of the platform and different working stations consisting in a swivelling secondary frame (26) which carries the material (31, 36) necessary for the cutting of the hole previous to the forming of the collar and the local heating of the rim of said hole, as well as for the dressing and the bevelling of the collar once it is formed, and in a principal swivelling frame (11) carrying the material (18) necessary for the hot forming of the collar.

2. Machine according to claim 1, characterized in that the metallic platform (1) which constitutes the machine is a mechanically welded assembly fixed rigidly to the ground and worked in such a way that is represents a double roller path for the working piece support carriage (3) above a cave (2) in the ground and in which are situated the charging and decharging station (8, 10) and the space requirement of the secondary (26) and principal frame (11) during their swivel.

3. Machine according to one of the claims 1 and 2, characterized in that the charging and decharging station consists in a double effect pneumatic cylinder (8) supported by a platform (9) which is anchored in the cave, said vertical action cylinder carrying at the end of its shaft a plate (10) designed to support the piece to be worked either during its installation on the working piece support carriage (3) or during its ejection for evacuation after working.

4. Machine according to one of the claims 1 to 3, characterized in that the working piece support carriage (3) also carries the material (25) necessary for the dressing and the bevelling of the rim of the piece on which a collar is to be executed.

5. Machine according to one of the claims 1 to 4, characterized in that the working piece support carriage (3) consists in a mechanically welded chassis (1), which is supplied with trolleys and propelled by means of a two speed brake gear and which is grooved out in its center and carries in its upper part a circular rail (4) permitting the rotation of a plate (5), the latter being propelled via a toothed wheel and chain device by a brake gear with variable speed, and presenting a circular hole (6) which allows the passing through of the plate (10) of the charging station and in which supports (7) are fitted which form an arch permitting a quick and precise positioning and centering of the piece to be worked.

6. Machine according to one of the claims 1 to 5, characterized in that the working stations, called principal swivelling frame (11) and secondary swivelling frame (26) are constituted by a mechanically welded double scaffold or frame swivelling round a horizontal axis disposed perpendicularly to the transfer axis of the working piece support carriage (3), the inclination control of the frames being effected by means of a pneumatic cylinder, said frames inclining parallelly and simultaneously due to a set of levers linking them at their upper and lower parts.

7. Machine according to claim 6, characterized in that the lower cross-beam (11a) of the principal swivelling frame (11) carries in its center and according to a vertical axis contained in the central transversal plane if the frame a pneumatic cylinder (13) assuring simultaneously the two functions necessary for the obtention of the collar, said pneumatic cylinder being composed of a cylinder in which glide two independent pistons (14, 15), one of them being fixed to the press device, the other carrying the forming tool by traction (18), the high pressure oil introduced between the two pistons supplying an identical force to the press and the working tool according to the principal action = reaction, so that no stress is transferred to the frame.

8. Machine according to claim 7, characterized in that the press device is submitted to the action of two secondary pneumatic cylinders allowing quick approach and retreat maneuvers.

9. Machine according to claim 7 or 8, characterized in that the tool necessary for the forming of the collar is composed of a matrix press (17) of treated steel, centred and fixed on one of the pistons (15) of the pneumatic cylinder, and of an olive-shaped head (18) in a special cast fixed to the end of the shaft of the other piston (14) of said pneumatic cylinder by means of a quart rotation device for quick mounting and removing.

10 Machine according to claim 9, characterized in that the upper crossbeam (11b) of the principal swivelling frame (11) carries in its center and according to the vertical axis passing through the traction cylinder, a device for automatic recycling of the olive-shaped head consisting of a linear cylinder (20) controlling a plate (21) which is guided in translation by two lateral columns (22) and on which is mounted a rotating cylinder (23), the latter activating a tightening piece (24) which assures by a quart of rotation the quick blocking of the olive-shaped head (18) in the device placed at the end of the shaft (14) of the traction piston.

11. Machine according to the claims 1 to 10, characterized in that the upper crossbeam (26a) of the secondary swivelling frame (26) carries in its center and according to a vertical axis contained in the central transversal plane of the frame a blowpipe device constituted by a linear cylinder (27) controlling in translation a plate (28) which is guided by two lateral columns (29) and on which is mounted and propelled in rotation another plate (30) by means of a brake gear with variable speed, said other plate comprising a blowpipe head (31) with an adjustable fixing radius in order to produce holes with different determined diameters depending on the collar to be formed.

12 Machine according to the claims 1 to 11, characterized in that the lower cross-beam (26b) of the secondary swivelling frame (26) carries according to the axis of the blowpipe device of the upper crossbeam a heating device constituted by a linear cylinder moving a plate (33) which is guided in translation by means of two lateral columns (34) and on which is mounted another plate (35) supplied with blowpipes (36) and propelled in to and fro rotation by a rotating cylinder (37), the heating thus obtained being limited to the periphery of the hole.

13. Machine according to the claims 1 to 12, characterized in that the lower crossbeam carriage (3) is supplied with a blowpipe head (25) which is adjustable in height and according to the exterior diameter of the working piece, said head being equipped with two blowpipes allowing the simultaneous dressing and bevelling of the rim of the working piece for its welding connexion with the casing of the apparatus into which it is fitted.

FIG.1

0 007 871

FIG. 2

FIG. 3